# EUROPÄISCHE PATENTSCHRIFT

(11) **EP 0 876 699 B1**
(45) Veröffentlichungstag und Bekanntmachung des Hinweises auf die Patenterteilung: **17.04.2002**
(21) Anmeldenummer: 97914060.5
(22) Anmeldetag: 16.01.1997
(51) Int. Cl.: H02H 9/02, H02H 9/00

(54) **STROMBEGRENZUNGSSCHALTUNG**
CURRENT LIMITING CIRCUIT
CIRCUIT LIMITEUR DE COURANT

(30) Priorität: 22.01.1996 DE 19602121
(43) Veröffentlichungstag der Anmeldung: 11.11.1998
(73) Patentinhaber: SIEMENS AKTIENGESELLSCHAFT, 80333 München (DE)
(72) Erfinder: HIRMER, Gerald, D-92708 Mantel (DE)
(86) Internationale Anmeldenummer: DE9700069
(87) Internationale Veröffentlichungsnummer: WO9727657

(56) Entgegenhaltungen:
- EP-A- 0 272 514
- EP-A- 0 524 425
- DE-A- 4 013 731

## Beschreibung

Die vorliegende Erfindung betrifft eine Strombegrenzungsschaltung nach dem Oberbegriff des Anspruchs 1. Diese wird mit einer Eingangsgleichspannung gespeist und gibt einen Ausgangsgleichstrom ab, wobei der durch eine angeschlossene kapazitive Last fließende Ausgangsgleichstrom begrenzt ist.

Eine Schaltung, die beim Anschalten einer kapazitiven Last an eine Gleichspannungsquelle den durch diese Last fließenden Gleichstrom begrenzt, ist aus der DE 40 13 731 C2 bekannt.

Bei der in der genannten Schrift beschriebenen Schaltung wird bei anliegender Eingangsgleichspannung an den Ausgangsanschlüssen stets ein Ausgangsgleichstrom abgegeben. Als Folge davon tritt auch bei niedrigen Eingangsgleichspannungen schon ein Stromfluß durch eine angeschlossene Last auf, so daß die angeschlossene Last in unzulässigen Spannungsbereichen betrieben wird.

Eine Schaltung nach dem Oberbegriff des Anspruchs 1 ist z.B. aus der EP-0-272 514 bekannt. Bei der in der genannten Schrift beschriebenen Schaltung steigt der maximal mögliche Ausgangsgleichstrom beim Erhöhen der Eingangsgleichspannung von Null Volt proportional mit der Eingangsgleichspannung an.

Die Aufgabe der vorliegenden Erfindung besteht daher darin, unzulässige Betriebszustände der angeschlossenen Last insbesondere bei niedrigen Eingangsgleichspannungen zu vermeiden, und darüber hinaus den Übergang zwischen einer Phase, in der ein verhältnismäßig geringer maximal möglicher Ausgangsgleichstrom abgegeben werden kann, und einer Phase, in der ein deutlich höherer maximal möglicher Ausgangsgleichstrom abgegeben werden kann, stark zu verkürzen.

Diese Aufgabe wird durch eine Schaltung gemäß Anspruch 1 gelöst.

Das gewünschte Ausgangsverhalten läßt sich schaltungstechnisch besonders einfach gemäß Anspruch 2 realisieren. Zum Aufbau der Schaltung werden nur wenige, einfache Bauelemente benötigt, wobei insbesondere die Dimensionierung der Unterspannungszenerdiode den Unterspannungsschwellwert festlegt. In der konkreten Realisierung liegt dieser Unterspannungsschwellwert bei 7,5 Volt.

Wenn beim Erhöhen der Eingangsgleichspannung von Null Volt auf die Sollspannung der maximal mögliche Ausgangsgleichstrom sprunghaft ansteigt, wobei die Eingangsgleichspannung einen unterhalb der Sollspannung liegenden Aktivierungsschwellwert überschreitet, wird erreicht, daß der Übergang zwischen einer Phase, in der ein verhältnismäßig geringer maximal möglicher Ausgangsgleichstrom abgegeben werden kann, und einer Phase, in der ein deutlich höherer maximal möglicher Ausgangsgleichstrom abgegeben werden kann, stark verkürzt ist.

Gemäß Anspruch 4 wird eine Stabilisierung der Stromversorgung der angeschlossenen Last dadurch erreicht, daß beim Verringern der Eingangsgleichspannung von einem Spannungswert, der über dem Aktivierungsschwellwert liegt, auf Null Volt der maximal mögliche Ausgangsgleichstrom erst bei einem unterhalb des Aktivierungsschwellwertes liegenden Einbruchsschwellwert sprunghaft absinkt.

Das Ausgangsverhalten der Schaltung ist wiederum durch eine besonders einfache schaltungstechnische Realisierung gemäß Anspruch 6 erreichbar.

Zum Schutz der angeschlossenen Last sowie gleichfalls zum Schutz der in der Strombegrenzungsschaltung befindlichen Bauelemente ist weiterhin vorgesehen, daß die Schaltung einen Uberspannungsschutz besitzt, so daß durch eine angeschlossene Last kein Ausgangsgleichstrom fließt, sobald die Eingangsgleichspannung einen oberhalb der Sollspannung liegenden Überspannungsschwellwert überschreitet.

Wiederum ist das beschriebene Ausgangsverhalten der Schaltung durch eine einfache schaltungstechnische Realisierung erreichbar, wobei insbesondere die Dimensionierung einer Überspannungszenerdiode den Überspannungsschwellwert festlegt.
In der konkreten Realisierung liegt dieser Überspannungsschwellwert bei 36 Volt.

Weitere Vorteile und erfinderische Einzelheiten ergeben sich aus der nachfolgenden Beschreibung eines Ausführungsbeispiels anhand der Zeichnungen.

Im einzelnen zeigt:
- FIG 1: eine Strombegrenzungsschaltung und
- FIG 2: das Ausgangsverhalten der Strombegrenzungsschaltung.

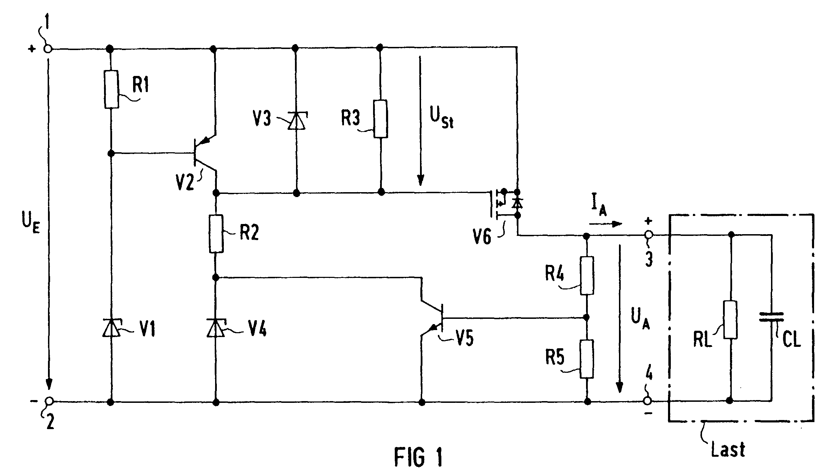

In FIG 1 erkennt man eine Strombegrenzungsschaltung mit einem positiven und einem negativen Eingangsanschluß 1,2, an die jeweils das positive bzw. das negative Potential einer Eingangsgleichspannung U_{E} anlegbar ist. Ferner erkennt man einen positiven und einen negativen Ausgangsanschluß 3,4, an denen jeweils das positive bzw. das negative Potential einer Ausgangsgleichspannung U_{A} abgreifbar ist.

Die Strombegrenzungsschaltung liefert ausgangsseitig einen maximal möglichen Ausgangsgleichstrom I_{A}^{max}, wobei im Falle einer ausreichenden Eingangsgleichspannung U_{E} durch die angeschlossene Last RL, CL ein Ausgangsgleichstrom I_{A} fließt.

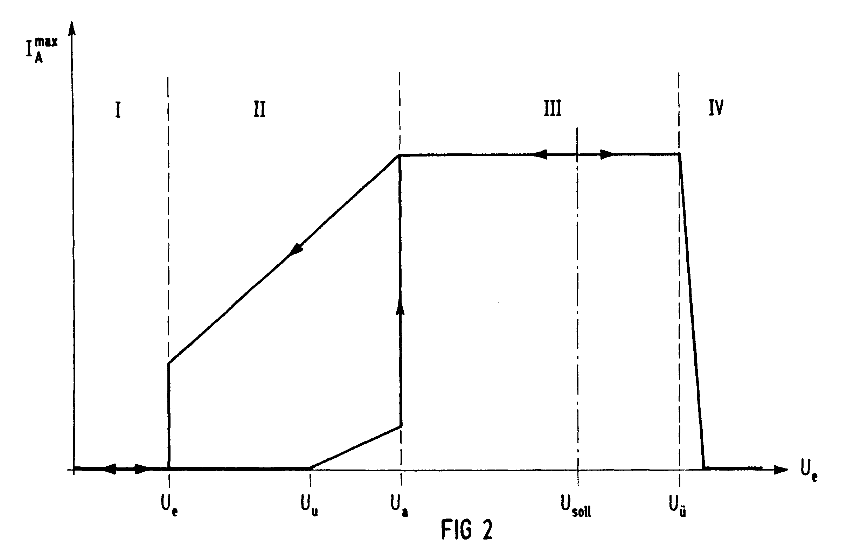

FIG 2 zeigt das Ausgangsverhalten der Strombegrenzungsschaltung nach FIG 1. Für den Fall einer steigenden Eingangsgleichspannung U_{E} erkennt man vier Bereiche (I, II, III, IV) unterschiedlichen Ausgangsverhaltens bezogen auf den maximal möglichen Ausgangsgleichstrom I_{A}^{max}:
I) Für Eingangsgleichspannungen U_{E} unterhalb eines Unterspannungsschwellwertes Uᵤ erkennt man, daß der maximal mögliche Ausgangsgleichstrom I_{A}^{max} verschwindet. Durch eine angeschlossene Last RL, CL fließt in diesem Falle kein Ausgangsgleichstrom I_{A}.
   Dieses Ausgangsverhalten wird durch das geeignete Zusammenwirken der folgenden, in der Strombegrenzungsschaltung enthaltenen Bauteile erreicht:
   - Ein selbstsperrender MOS-FET V6 mit einem Gate-, einem Source- und einem Drain-Anschluß,
   - eine Parallelschaltung aus einem Widerstand R3 und einer Zenerdiode V3, die eine zwischen Gate- und Source-Anschluß des MOS-FET V6 liegende Steuerspannung U_{St} begrenzt, sowie weiterhin
   - eine Serienschaltung aus einem Widerstand R2 und einer Zenerdiode V4, die einen Stromfluß erst ab Erreichen des Unterspannungsschwellwertes Uᵤ für die Eingangsgleichspannung U_{E} zuläßt.
   Der Widerstand R3 wird im folgenden Parallelwiderstand, die Zenerdiode V3 Begrenzungszenerdiode genannt. Der Widerstand R2 wird im folgenden Serienwiderstand, die Zenerdiode V4 Unterspannungszenerdiode genannt.
   Der Source-Anschluß des MOS-FET V6 ist mit dem positiven Eingangsanschluß 1, der Drain-Anschluß mit dem positiven Ausgangsanschluß 3 verbunden. Der Gate-Anschluß des MOS-FET V6 ist einerseits über die Parallelschaltung R3, V3 mit dem positiven Eingangsanschluß 1 sowie andererseits über die Serienschaltung R2, V4 mit dem negativen Eingangsanschluß 2 verbunden.
   Negativer Eingangsanschluß 2 und negativer Ausgangsanschluß 4 sind direkt miteinander verbunden, so daß die Schaltung insbesondere auch mit nur drei externen Anschlüssen realisierbar ist.
   Im Falle von Eingangsgleichspannungen U_{E} unterhalb des Unterspannungsschwellwertes Uᵤ sperrt die Unterspannungszenerdiode V4. Daher fließt durch die Widerstände R2, R3 kein Strom. Folglich fällt an dem Parallelwiderstand R3 keine Spannung ab, so daß die Steuerspannung U_{St} Null ist. Die gesamte Eingangsgleichspannung U_{E} fällt also zwischen Source- und Drain-Anschluß des MOS-FET V6 ab. Damit fällt zwischen den Ausgangsanschlüssen 3,4 keine Spannung ab, so daß auch durch eine eventuell angeschlossene Last RL, CL kein Ausgangsgleichstrom I_{A} fließt.
II) Steigt die Eingangsgleichspannung U_{E} über den Unterspannungsschwellwert Uᵤ, so leitet die Unterspannungszenerdiode V4. Ein Strom fließt durch die Widerstände R2, R3. Die Steuerspannung U_{St} ist proportional zu dem durch den Parallelwiderstand R3 fließenden Strom, daher beginnt der MOS-FET V6 zu leiten, so daß durch eine angeschlossene Last RL, CL ein Ausgangsgleichstrom I_{A} fließt, der von der Größe der angelegten Eingangsgleichspannung U_{E} abhängt. Für das beschriebene Verhalten der Schaltung ist insbesondere die Dimensionierung der Widerstände R2, R3 entscheidend. In der konkreten Realisierung haben diese einen Wert von 10kΩ bzw. 100kΩ .
III) Steigt die Eingangsgleichspannung U_{E} weiter an, so steigt der maximal mögliche Ausgangsgleichstrom I_{A}^{max} bei Erreichen eines Aktivierungsschwellwert Uₐ für die Eingangsgleichspannung U_{E} sprunghaft an.
   Dieses Ausgangsverhalten wird durch das geeignete Zusammenwirken der folgenden, in der Strombegrenzungsschaltung weiterhin enthaltenen Bauteile untereinander und mit der bereits beschriebenen Schaltung erreicht:
   - Ein Transistor V5 mit einem Basisanschluß and einer Emitter-Kollektor-Strecke, der im durchgeschalteten Zustand die Unterspannungszenerdiode V4 auskoppelt, sowie
   - einen Spannungsteiler mit einem ersten and einem zweiten Spannungsteilerwiderstand R4, R5.
   Der Transistor V5 wird im folgenden Auskoppelungstransistor genannt.
   Die Emitter-Kollektor-Strecke des Auskoppelungstransistors V5 ist parallel zu der Unterspannungszenerdiode V4 angeordnet. Der Basisanschluß ist einerseits über den ersten Spannungsteilerwiderstand R4 mit dem positiven Ausgangsanschluß 3 und andererseits über den zweiten Spannungsteilerwiderstand R5 mit dem negativen Ausgangsanschluß 4 verbunden.
   Im Falle eines durch den MOS-FET V6 fließenden Stromes fließt auch durch die Spannungsteilerwiderstände R4, R5 ein Strom. Erreicht dieser - mit der Eingangsgleichspannung U_{E} - ansteigende Strom eine bestimmte Stärke, so wird der Auskoppelungstransistor V5 leitend, so daß die Unterspannungszenerdiode V4 ausgekoppelt - d.h. näherungsweise kurzgeschlossen - wird. Der Wert der Eingangsgleichspannung U_{E}, bei dem durch die Spannungsteilerwiderstände R4, R5 ein ausreichender Strom fließt, so daß der Auskoppelungstransistor V5 leitend wird, wird als Aktivierungsschwellwert Uₐ bezeichnet. Für das beschriebene Verhalten der Schaltung ist insbesondere die Dimensionierung der Spannungsteilerwiderstände R4, R5 entscheidend. In der konkreten Realisierung haben diese einen Wert von 47kΩ bzw. 10kΩ.
   Die Spannung, die vor Erreichen des Aktivierungsschwellwertes Uₐ - und damit bis unmittelbar vor der Auskopplung der Unterspannungszenerdiode V4 - an der Unterspannungszenerdiode V4 abgefallen ist, fällt dann schlagartig zusätzlich an den Widerständen R2 and R3 ab. Damit steigt die Spannung am Parallelwiderstand R3 and damit die Steuerspannung Uₛₜ schlagartig an. Dies führt dazu, daß auch der von der Strombegrenzungsschaltung gelieferte maximal mögliche Ausgangsgleichstrom I_{A}^{max} schlagartig ansteigt.
   Für eine weiter steigende Eingangsgleichspannung U_{E} begrenzt die Begrenzungszenerdiode V3 die Steuerspannung U_{St} des MOS-FET V6. Der maximal durch den MOS-FET V6 fließende Strom - und damit gleichzeitig der durch die angeschlossene Last RL, CL fließende Ausgangsgleichstrom I_{A} - ist damit gleichfalls begrenzt. In der konkreten Realisierung ist die maximale Steuerspannung U_{St} durch die Dimensionierung der Begrenzungszenerdiode V3 auf 9,1 Volt festgelegt. Damit ist die gewünschte Wirkungsweise der Strombegrenzungsschaltung erreicht. Beim weiteren Erhöhen der Eingangsgleichspannung U_{E} bleibt daher der maximal mögliche Ausgangsgleichstrom I_{A}^{max} im wesentlichen konstant.
IV) Überschreitet die Eingangsgleichspannung U_{E} einen Überspannungsschwellwert U_{ü}, so verschwindet der Ausgangsgleichstrom I_{A}.
   Dieses Ausgangsverhalten wird durch das geeignete Zusammenwirken der folgenden, in der Strombegrenzungsschaltung weiterhin enthaltenen Bauteile untereinander und mit der bereits beschriebenen Schaltung erreicht:
   - Eine Reihenschaltung aus einem Widerstand R1 und einer Zenerdiode V1, die den Stromfluß erst ab Erreichen des Überspannungsschwellwertes U_{ü} für die Eingangsgleichspannung U_{E} zuläßt, sowie
   - ein Transistor V2 mit einer Emitter-Kollektor-Strecke und einem Basisanschluß, der im Falle einer anliegenden Eingangsüberspannung einen Spannungsabfall zwischen Gateund Source-Anschluß des MOS-FET V6 verhindert.
   Der Widerstand R1 wird im folgenden Überspannungswiderstand genannt. Die Zenerdiode V1 wird im folgenden Überspannungszenerdiode genannt. Der Transistor V2 wird im folgenden Überspannungstransistor genannt
   Die Emitter-Kollektor-Strecke des Überspannungstransistors V2 ist parallel zu der Begrenzungszenerdiode V3 angeordnet. Der Basisanschluß ist einerseits über den Überspannungswiderstand R1 mit dem positiven Eingangsanschluß 1 und andererseits über die in Sperrichtung geschaltete Überspannungszenerdiode V1 mit dem negativen Eingangsanschluß 2 verbunden.
   Die Überspannungszenerdiode V1 ist so dimensioniert, daß sie erst ab dem über der Sollspannung U_{Soll} liegenden Überspannungschwellwert U_{ü} leitet. Umgekehrt sperrt die Überspannungszenerdiode V1 im Falle einer Eingangsgleichspannung U_{E} unterhalb dieses Überspannungsschwellwertes U_{ü}.
   Im Falle einer anliegenden Überspannung leitet die Überspannungszenerdiode V1 den Strom. Folglich wird die Basis des Überspannungstransistors V2 leitend, so daß Gate- und Source-Anschluß des MOS-FET V6 näherungsweise kurzgeschlossen werden. Die Steuerspannung U_{St} des MOS-FET V6 bricht damit zusammen, so daß durch den MOS-FET V6 fast kein Strom fließt und damit gleichfalls durch eine angeschlossene Last RL, CL näherungsweise kein Ausgangsgleichstrom I_{A} fließt. Folglich gibt die Strombegrenzungsschaltung für Eingangsgleichspannungen U_{E} oberhalb des Überspannungsschwellwertes U_{ü} näherungsweise keinen Ausgangsgleichstrom I_{A} ab.

Verringert man den Wert der Eingangsgleichspannung U_{E} ausgehend von einem Spannungswert, der oberhalb des Überspannungsschwellwertes U_{ü} liegt, so sperrt bei Erreichen des Überspannungsschwellwertes U_{ü} zunächst die Überspannungszenerdiode V1. Damit ergibt sich unmittelbar wieder eine Steuerspannung U_{St} zwischen Gate- und Source-Anschluß des MOS-FET V6. Infolge der durch die Begrenzungszenerdiode V3 begrenzten Steuerspannung U_{St} kann durch den MOS-FET V6 wiederum nur ein begrenzter maximaler Strom fliessen, so daß durch eine an die Ausgangsanschlüsse 3, 4 angeschlosse Last RL, CL gleichfalls ein begrenzter maximal möglicher Ausgleichsgleichstrom I_{A}^{max} fließt. Da in diesem Falle auch über die beiden Spannungsteilerwiderstände R4, R5 ein ausreichender Strom fließt, ist die Basis des Auskoppelungstransistors V5 leitend, so daß die Unterspannungszenerdiode V4 näherungsweise kurzgeschlossen ist.

Beim Verringern der Eingangsgleichspannung U_{E} erfolgt ein sprunghafter Abfall des maximal mögliche Ausgangsgleichstromes I_{A}^{max} erst unterhalb des Aktivierungsschwellwertes Uₐ - nämlich bei Erreichen des Einbruchsschwellwertes Uₑ. Der maximale Ausgangsgleichstrom I_{A}^{max} bildet damit eine Hysterese. Durch diese Hysterese ist sichergestellt, daß im Falle von Eingangsgleichspannungen U_{E} oberhalb des Aktivierungsschwellwertes Uₐ bei geringen Spannungseinbrüchen weiterhin ein nennenswerter maximal möglicher Ausgangsgleichstrom I_{A}^{max} durch die Last RL, CL fließen kann. Dies ist insbesondere dann von Bedeutung, wenn beim Anschalten der Last RL, CL die Eingangsgleichspannung U_{E} noch unterhalb der Sollspannung Uₛₒₗₗ liegt. Auch wenn dabei die Eingangsgleichspannung U_{E} kurzfristig unter den Aktivierungsschwellwert Uₐ sinkt, jedoch oberhalb des Einbruchsschwellwertes Uₑ verbleibt, kann stets der gleiche maximal mögliche Ausgangsgleichstrom I_{A}^{max} durch die Last RL, CL fließen. Das Schaltungsverhalten wird dadurch stabilisiert.

Beim weiteren Verringern der Eingangsgleichspannung U_{E} wird schließlich eine Position erreicht, bei der die Begrenzungszenerdiode V3 den Strom sperrt. Die Steuerspannung Uₛₜ ist in diesem Falle proportional zu dem durch den Parallelwiderstand R3 fließenden Strom und damit abhängig von der Eingangsgleichspannung U_{E}. Mit der Abhängigkeit der Steuerspannung U_{St} von der Eingangsgleichspannung U_{E} wird auch der Ausgangsgleichstrom I_{A} abhängig von der Eingangsgleichspannung U_{E}.

Die Unterspannungszenerdiode V4 bleibt dabei so lange ausgekoppelt, solange durch die Spannungsteilerwiderstände R4, R5 ein ausreichender Strom fließt, so daß die Basis des Auskopplungstransistors V5 leitend bleibt.

Verliert - bei weiterem Verringern der Eingangsgleichspannung U_{E} - die Basis des Auskoppelungstransistors V5 die leitende Eigenschaft, so fließt kein Strom mehr über die Emitter-Kollektor-Strecke des Auskopplungstransistors V5, so daß unmittelbar ein Spannungsabfall über die Unterspannungszenerdiode V4 erfolgt. Da zu diesem Zeitpunkt die Eingangsgleichspannung U_{E} bereits unterhalb des Unterspannungsschwellwertes Uᵤ liegt, sperrt die Unterspannungszenerdiode V4 den Stromfluß, so daß kein Strom durch den Serienwiderstand R2 oder den Parallelwiderstand R3 fließt. Damit verschwindet die Steuerspannung U_{St}, so daß kein Ausgangsgleichstrom I_{A} abgegeben wird.

Die beschriebene Strombegrenzungsschaltung ist vorteilhafterweise einem mit Gleichspannung gespeisten Spannungswandler, d.h. einem sogenannten DC-DC-Wandler, vorgeschaltet. Derartige DC-DC-Wandler werden beispielsweise in der Systemstromversorgung von speicherprogrammierbaren Steuerungen eingesetzt.

## Patentansprüche

1. Strombegrenzungsschaltung
- mit einem positiven und einem negativen Eingangsanschluß (1, 2), an die jeweils das positive bzw. das negative Potential einer Eingangsgleichspannung (U_{E}) vorbestimmter Sollspannung (U_{Soll}) anlegbar ist,
- mit einem positiven und einem negativen Ausgängsanschluß (3, 4), an denen jeweils das positive bzw. das negative Potential einer Ausgangsgleichspannung (U_{A}) abgreifbar ist,
- die ausgangsseitig einen maximal möglichen Ausgangsgleichstrom (I_{A}^{max}) liefert, der
-- für eine Eingangsgleichspannung (U_{E}) unterhalb eines bestimmten Schwellwertes von der Eingangsgleichspannung (U_{E}) abhängig ist und
-- für eine Eingangsgleichspannung (U_{E}) oberhalb des bestimmten Schwellwertes im wesentlichen konstant ist,
- an die ausgangsseitig eine Last (RL, CL) anschließbar ist,
- wobei beim Erhöhen der Eingangsgleichspannung (U_{E}) von Null Volt auf die Sollspannung (U_{Soll}) durch die angeschlossene Last (RL, CL) ein Ausgangsgleichstrom (I_{A}) erst dann fließt, wenn der Wert der Eingangsgleichspannung (U_{E}) auf einen Wert oberhalb eines Unterspannungsschwellwertes (Uᵤ), der unterhalb der Sollspannung (U_{Soll}) liegt, steigt,
**dadurch gekennzeichnet,**
**daß** beim Erhöhen der Eingangsgleichspannung (U_{E}) von Null Volt auf die Sollspannung (U_{Soll}) der maximal mögliche Ausgangsgleichstrom (I_{A}^{max}) sprunghaft ansteigt, wenn die Eingangsgleichspannung (U_{E}) einen Aktivierungsschwellwert (Uₐ), der unterhalb der Sollspannung (U_{Soll}) liegt, überschreitet.

2. Strombegrenzungsschaltung nach Anspruch 1,
**dadurch gekennzeichnet,**
- **daß** sie einen selbstsperrenden MOS-FET (V6) mit jeweils einem Source-, einem Gate- und einem Drain-Anschluß aufweist,
- **daß** der Source-Anschluß mit dem positiven Eingangsanschluß (1) verbunden ist,
- **daß** der Drain-Anschluß mit dem positiven Ausgangsanschluß (3) verbunden ist,
- **daß** der Gate-Anschluß einerseits über eine Parallelschaltung aus einem Parallelwiderstand (R3) und einer Begrenzungszenerdiode (V3) mit dem positiven Eingangsanschluß (1) und andererseits über eine Reihenschaltung aus einem Serienwiderstand (R2) und einer Unterspannungszenerdiode (V4) mit dem negativen Eingangsanschluß (2) verbunden ist,
- **daß** der negative Eingangsanschluß (2) mit dem negativen Ausgangsanschluß (4) verbunden ist und
- **daß** sowohl die Unterspannungszenerdiode (V4) als auch die Begrenzungszenerdiode (V3) hinsichtlich der Richtung des Stromflusses in Sperrichtung geschaltet ist.

3. Strombegrenzungsschaltung nach Anspruch 1 oder 2,
**dadurch gekennzeichnet, daß**
der Aktivierungsschwellwert (Uₐ) der Eingangsgleichspannung (U_{E}) über dem Unterspannungsschwellwert (Uᵤ) liegt.

4. Strombegrenzungsschaltung nach Anspruch 1, 2 oder 3,
**dadurch gekennzeichnet, daß**
beim Verringern der Eingangsgleichspannung (U_{E}) von einem Spannungswert, der über dem Aktivierungsschwellwert (Uₐ) liegt, auf Null Volt der maximal mögliche Ausgangsgleichstrom (I_{A}^{max}) erst bei einem unterhalb des Aktivierungsschwellwertes (Uₐ) liegenden Einbruchsschwellwert (Uₑ) sprunghaft absinkt.

5. Strombegrenzungsschaltung nach Anspruch 4,
**dadurch gekennzeichnet, daß**
der Einbruchsschwellwert (Uₑ) unterhalb des Unterspannungsschwellwertes (Uᵤ) liegt.

6. Strombegrenzungsschaltung nach den Ansprüchen 1 bis 4 oder den Ansprüchen 1 bis 5,
**dadurch gekennzeichnet,**
- **daß** sie einen Auskopplungstransistor (V5) mit einem Basisanschluß und einer Emitter-Kollektor-Strecke aufweist,
- **daß** die Emitter-Kollektor-Strecke parallel zu der Unterspannungszenerdiode (V4) angeordnet ist und
- **daß** der Basisanschluß einerseits über einen ersten Spannungsteilerwiderstand (R4) mit dem positiven Ausgangsanschluß (3) und andererseits über einen zweiten Spannungsteilerwiderstand (R5) mit dem negativen Ausgangsanschluß (4) verbunden ist.

7. Strombegrenzungsschaltung nach einem der obigen Ansprüche,
**dadurch gekennzeichnet, daß**
durch eine angeschlossene Last (RL, CL) kein Ausgangsgleichstrom (I_{A}) fließt, sobald die Eingangsgleichspannung (U_{S}) einen oberhalb der Sollspannung (U_{Soll}) liegenden Überspannungsschwellwert (U_{ü}) überschreitet.

8. Strombegrenzungsschaltung nach den Ansprüchen 2 und 7,
**dadurch gekennzeichnet,**
- **daß** sie einen Überspannungstransistor (V2) mit einem Basisanschluß und einer Emitter-Kollektor-Stecke aufweist,
- **daß** die Emitter-Kollektor-Stecke parallel zu der Begrenzungszenerdiode (V3) angeordnet ist und
- **daß** der Basisanschluß einerseits über einen Überspannungswiderstand (R1) mit dem positiven Eingangsanschluß (1) und andererseits über eine in Sperrichtung geschaltete Überspannungszenerdiode (V1) mit dem negativen Eingangsanschluß (2) verbunden ist.

9. Strombegrenzungsschaltung nach einem der obigen Ansprüche,
**dadurch gekennzeichnet, daß** sie einem mit Gleichspannung gespeisten Spannungswandler vorgeschaltet ist.

## Claims

1. A current limiting circuit
- with a positive and a negative input connection (1, 2), to which, in each case, the positive and the negative potential, respectively, of an input DC voltage (U_{E}) of a predetermined reference voltage (U_{Soll}) can be applied,
- with a positive and a negative output connection (3, 4), from which, in each case, the positive and the negative potential, respectively, of an output DC voltage (U_{A}) can be tapped off,
- which on the output side provides a maximum possible output DC current (I_{A}^{max}) which
-- is dependent on an input DC voltage (U_{E}) below a predetermined threshold value of the input DC voltage (U_{E}) and
-- is essentially constant when the input DC voltage (U_{E}) is above the predetermined threshold value
- to which a load (RL, CL) can be connected on the output side,
- whereby, when the input DC voltage (U_{E}) is raised from zero volts to the reference voltage (U_{Soll}), an output DC current (I_{A}) through the connected load (RL, CL) only when the input DC voltage (U_{E}) rises to a value above an undervoltage threshold value (Uᵤ), the undervoltage threshold value being less than the reference voltage (U_{Soll}),
**characterised in that** when the input DC voltage (U_{E}) is raised from zero volts to the reference voltage (U_{Soll}), the maximum possible output DC current (I_{A}^{max}) suddenly rises when the input DC voltage (U_{E}) exceeds an activation threshold value (Uₐ), the activation threshold value being less than the reference voltage (U_{Soll}).

2. Current limiting circuit according to Claim 1, **characterised in that**
- it has a normally-off MOSFET (V6) with a source connection, a gate connection and a drain connection,
- the source connection is connected to the positive input connection (1),
- the drain connection is connected to the positive output connection (3),
- the gate connection is connected, on the one hand, to the positive input connection (1) via a parallel circuit, the parallel circuit including a parallel resistor (R3) and a limiting zener diode (V3), and, on the other hand, to the negative input connection (2) via a series circuit, the series circuit including a series resistor (R2) and an undervoltage zener diode (V4),
- the negative input connection (2) is connected to the negative output connection (4) and
- both the undervoltage zener diode (V4) and the limiting zener diode (V3) are connected in the reverse direction as regards the direction of flow of the current.

3. Current limiting circuit according to Claim 1 or 2, **characterised in that** the activation threshold value (Uₐ) of the input DC voltage (U_{E}) is greater than the undervoltage threshold value (Uᵤ).

4. Current limiting circuit according to Claim 1, 2, or 3, **characterised in that** when the input DC voltage (U_{E}) is reduced from a voltage value above the activation threshold value (Uₐ) to zero volts, the maximum possible output DC current (I_{A}^{max}) suddenly falls only when a notch threshold value (Uₑ) is less than the activation threshold value (Uₐ).

5. Current limiting circuit according to Claim 4, **characterised in that** the notch threshold value (Uₑ) is less than the undervoltage threshold value (Uᵤ).

6. Current limiting circuit according to Claims 1 to 4 or to Claims 1 to 5, **characterised in that**
- it has a decoupling transistor (V5) with a base connection and an emitter-collector path,
- the emitter-collector path is connected in parallel to the undervoltage zener diode (V4), and
- the base connection is connected, on the one hand, to the positive output connection (3) via a first voltage divider resistor (R4) and, on the other hand, to the negative output connection (4) via a second voltage divider resistor (R5).

7. Current limiting circuit according to one of the above claims, **characterised in that** no output DC current (I_{A}) flows through a connected load (RL, CL) as soon as the input DC voltage (U_{E}) exceeds an overvoltage threshold value (U_{ü}), the overvoltage threshold value being greater than the reference voltage (U_{Soll}).

8. Current limiting circuit according to Claims 2 and 7, **characterised in that**
- it has an overvoltage transistor (V2) with a base connection and an emitter-collector path,
- the emitter-collector path is connected in parallel to the limiting zener diode (V3) and
- the base connection is connected, on the one hand, to the positive input connection (1) via an overvoltage resistor (R1) and, on the other hand, to the negative input connection (2) via an overvoltage zener diode (V1) connected in the reverse direction.

9. Current limiting circuit according to one of the above claims, **characterised in that** it is connected upstream of a voltage converter which is supplied with DC voltage.

## Revendications

1. Circuit limiteur de courant
- comprenant une borne (1) d'entrée positive et une borne (2) d'entrée négative auxquelles sont appliqués respectivement le potentiel positif et le potentiel négatif d'une tension (U_{E}) continue d'entrée à tension (U_{Soll}) de consigne déterminée à l'avance,
- comprenant une borne (3) de sortie positive et une borne (4) de sortie négative desquelles on peut prélever respectivement le potentiel positif et le potentiel négatif d'une tension (U_{A}) continue de sortie,
- qui fournit du côté de la sortie un courant (I_{A}^{max}) continu de sortie maximum possible, qui
-- dépend pour une tension (U_{E}) continue d'entrée inférieure à une valeur de seuil déterminée dé la tension (U_{E}) continue d'entrée et
-- est sensiblement constant pour une tension (U_{E}) continue d'entrée supérieure à la valeur de seuil déterminée,
- auquel peut être raccordée du côté de la sortie une charge (RL, CL),
- dans lequel il ne passe, lorsque la tension (U_{E}) continue d'entrée est élevée de zéro volt à la tension (U_{Soll}) de consigne dans la charge (RL, CL) raccordée, un courant (I_{A}) continu de sortie que si la valeur de la tension (U_{E}) continue d'entrée s'élève à une valeur supérieure à une valeur (Uᵤ) de seuil inférieur de tension qui est inférieure à la tension (U_{Soll}) de consigne,
**caractérisé en ce que** lors d'une élévation de la tension (U_{E}) continue d'entrée de zéro Volt à la tension (U_{Soll}) de consigne, le courant (I_{A}^{max}) continu de sortie maximum possible augmente brusquement si la tension (U_{E}) continue d'entrée dépasse une valeur (Uₐ) de seuil d'activation qui est inférieure à la tension (U_{Soll}) de consigne.

2. Circuit limiteur de courant suivant la revendication 1, **caractérisé**
- **en ce qu'**il comporte un MOS-FET (V6) autobloquant ayant respectivement une borne de source, une borne de grille et une borne de drain,
- **en ce que** la borne de source est reliée à la borne (1) d'entrée positive,
- **en ce que** la borne de drain est reliée à la borne (3) de sortie positive,
- **en ce que** la borne de grille est reliée d'une part par un circuit parallèle constitue d'une résistance (R3) en parallèle et d'une diode (V3) de Zener de limitation à la bome (1) positive d'entrée et d'autre part par un circuit série constitué d'une résistance (R2) série et d'une diode (V4) de Zener à minimum de tension à la borne (2) négative d'entrée,
- **en ce que** la borne (2) négative d'entrée est reliée à la borne (4) négative de sortie et
- **en ce que** tant la diode (V4) de Zener à minimum de tension que la diode (V3) de Zener de limitation sont montées dans le sens de blocage du point de vue de la direction du flux de courant.

3. Circuit limiteur de courant suivant la revendication 1 ou 2, **caractérisé en ce que** la valeur (Uₐ) de seuil d'activation de la tension (U_{E}) continue d'entrée est supérieure à la valeur (Uᵤ) inférieure de seuil de tension.

4. Circuit limiteur de courant suivant la revendication 1, 2 ou 3, **caractérisé en ce que** pour une diminution de la tension (U_{E}) continue d'entrée à partir d'une valeur de tension qui est supérieure à la valeur (Uₐ) de seuil d'activation jusqu'à zéro volt, le courant (I_{A}^{max}) continu de sortie le plus grand possible ne diminue brusquement que pour une valeur (Uₑ) de seuil de rupture inférieure à la valeur (Uₐ) de seuil d'activation.

5. Circuit limiteur de courant suivant la revendication 4, **caractérisé en ce que** la valeur (Uₑ) de seuil de rupture est inférieure à la valeur (Uᵤ) inférieure de seuil de tension.

6. Circuit limiteur de courant suivant les revendications 1 à 4 ou suivant les revendications 1 à 5, **caractérisé**
- **en ce qu'**il comporte un transistor (V5) de découplage ayant une borne de base et une section émetteur-collecteur,
- **en ce que** la section émetteur-collecteur est montée en parallèle à la diode (V4) de Zener à minimum de tension et
- **en ce que** la borne de base est reliée d'une part par une première résistance (R4) formant diviseur de tension à la borne (3) positive de sortie et d'autre part par une deuxième résistance (R5) formant diviseur de tension à la borne (4) négative de sortie.

7. Circuit limiteur de courant suivant l'une des revendications précédentes, **caractérisé en ce qu'**il ne passe pas par une charge (RL, CL) raccordée de courant (I_{A}) continu de sortie dès que la tension (U_{E}) continue d'entrée dépasse une valeur (Uᵤ) de seuil inférieur de tension supérieure à la tension (U_{Soll}) de consigne.

8. Circuit limiteur de courant suivant les revendications 2 et 7, **caractérisé**
- **en ce qu'**il comporte un transistor (V2) de surtension ayant une borne de base et une section émetteur-collecteur,
- **en ce que** la section émetteur-collecteur est montée en parallèle à la diode (V3) de Zener de limitation et
- **en ce que** la borne de base est reliée d'une part par une résistance (R1) de surtension à la borne (1) positive d'entrée et d'autre part par une diode (V1) de Zener de surtension montée dans le sens bloqué à la borne (2) négative d'entrée.

9. Circuit limiteur de courant suivant l'une des revendications précédentes, **caractérisé en ce qu'**il est monté en amont d'un transformateur de tension alimenté en tension continue.
